**Europäisches Patentamt**

**European Patent Office**

**Office européen des brevets**

(19)

(11) Veröffentlichungsnummer: **0 008 677**
**A1**

# EUROPÄISCHE PATENTANMELDUNG

(12)

(21) Anmeldenummer: **79102742.8**

(22) Anmeldetag: **01.08.79**

(51) Int. Cl.³: **B 29 D 9/10**

(30) Priorität: **09.08.78 DE 2834849**

(43) Veröffentlichungstag der Anmeldung:
**19.03.80 Patentblatt 80/6**

(84) Benannte Vertragsstaaten:
**AT CH GB IT NL SE**

(71) Anmelder: **Klingel, Wolfgang**
**Dieselstrasse 20**
**D-2750 Leonberg(DE)**

(72) Erfinder: **Klingel, Hans**
**Cäsar-Flaischlen-Weg 15**
**D-7250 Leonberg(DE)**

(72) Erfinder: **Klingel, Wolfgang**
**Dieselstrasse 20**
**D-2750 Leonberg(DE)**

(74) Vertreter: **Willich, Wolfgang, Dipl.-Ing.**
**Schönaicher Strasse 220**
**D-7030 Böblingen(DE)**

(54) **Verfahren zur Herstellung einer lichtdurchlässigen Kunstharz-Hohlkammer-Profilplatte mit strukturierter, lichtstreuender Oberfläche.**

(57) Zur Herstellung einer lichtdurchlässigen Kunstharz-Hohlkammer-Profilplatte mit strukturierter, lichtstreuender Oberfläche verwendet man als Ausgangswerkstück eine im Extrusionsverfahren hergestellte transparente Hohlkammer-Profilplatte aus thermoplastischem Werkstoff, z.B. PVC. Auf die Außenflächen oder eine der Außenflächen dieser Platte wird eine Deckschicht aus flüssig zugeführtem, lichtstabilisiertem, kalt- oder warmhärtendem transparentem Harz unter Verwendung einer strukturierten Formunterlage aufgebracht.

EP 0 008 677 A1

0008677

- 1 -

Verfahren zur Herstellung einer lichtdurchlässigen
Kunstharz-Hohlkammer-Profilplatte mit strukturierter,
lichtstreuender Oberfläche

Hohlkammer-Profilplatten aus Kunststoff haben sich wegen ihrer
besonderen Eigenschaften für bestimmte Anwendungen gut bewährt
und werden daher für verschiedene Zwecke in großem Umfang verwendet. Dabei macht man sich vor allem ihre hohe Festigkeit
bei verhältnismäßig geringem Gewicht und ihre Elastizität zunutze, sowie die Möglichkeit, bei Verwendung entsprechender
transparenter Werkstoffe Platten mit großer Lichtdurchlässigkeit herzustellen. Ein weiterer Vorteil ist die gegenüber Glasplatten wesentlich verringerte Verletzungsgefahr im Fall eines
Bruches.

Derartige, aus thermoplastischem Werkstoff, insbesondere aus
Polyvenylchlorid oder Methacrylat bestehende Platten werden

0008677

im Extrusionsverfahren hergestellt und weisen eine glatte oder leicht wellige Oberfläche auf. In transparenter Ausführung wird ihr Aussehen außerdem maßgeblich durch die in Längsrichtung parallel verlaufenden Innenstege bestimmt. Der Einsatz derartiger Hohlkammer-Profilplatten war daher bisher im Bauwesen nahezu ausschließlich auf Überdachungen beschränkt.

Der Erfindung liegt die Aufgabe zugrunde, Hohlkammer-Profilplatten dahingehend zu verbessern, daß ihnen unter Ausnutzung und weiterer Verbesserung ihrer hervorragenden Eigenschaften weitere Einsatzmöglichkeiten erschlossen werden, die ihnen bisher aufgrund der vorgenannten Eigenarten nicht oder nur beschränkt zugänglich waren. Diese Aufgabe ist nach dem erfindungsgemäßen Verfahren dadurch gelöst worden, daß auf die Außenfläche(n) einer aus thermoplastischem Werkstoff, insbesondere aus Polyvenylchlorid oder auf Methacrylatbasis hergestellten, extrudierten, transparenten Hohlkammer-Profilplatte zur Bildung einer strukturierten Oberfläche eine Deckschicht aus flüssig zugeführtem, lichtstabilisiertem, kalthärtendem transparentem Polyesterharz oder Acrylharz unter Verwendung einer strukturierten Formunterlage aufgebracht wird.

Mittels des erfindungsgemäßen Verfahrens wird die Hohlkammer-Profilplatte lichtstreuend, wie es für Haustüren, Lichtwände, besondere Verglasungen u. dgl. erforderlich ist, und erhält außerdem nicht nur ein wesentlich gefälligeres Aussehen, indem die Stege zwischen den Platten weniger deutlich sichtbar sind, sondern insbesondere eine noch höhere Festigkeit, speziell auch Schlagfestigkeit, was bei zahlreichen Anwendungen von Bedeutung ist, sowie einen hohen Isolierwert. Durch entsprechende Wahl der strukturierten Formunterlage kann hierbei die Stärke der Lichtstreuung beliebig gewählt werden.

Profilplatten mit strukturierter, lichtstreuender Oberfläche sind in anderen Ausführungen bereits bekannt, z.B. als Isolierglasplatten oder in der als Wabenglas bekannten Ausführung einer Sandwichplatte nach der DE-PS 1 646 226 mit Glasfaser-Polyester-Deckschichten und Wabenkernen, sowie in der Ausführung nach der DE-PS 2 511 895, bei der vorgefertigte Deckplatten aus Polymethylmethacrylat oder Mischpolymerisat auf Acrylnitrilbasis mit den Wabenkörpern verbunden werden. Diese bekannten Ausführungen haben jedoch gewisse Nachteile. So weisen Isolierglasplatten ein verhältnismäßig hohes Gewicht bei entsprechend erschwerter Handhabung auf und sind zudem bei Bruch mit Verletzungsgefahr verbunden. Kunststoffplatten nach den vorgenannten Ausführungen erfordern hingegen, wenn die fertigen Platten in Einzelplatten aufgetrennt werden, ein zuverlässiges Versiegeln der Plattenschnittkanten gegen den Eintritt von Feuchtigkeit. Wird nämlich dieser zusätzliche Bearbeitungsvorgang nicht oder nicht sorgfältig genug durchgeführt, so können im Plattenkern milchig-weiße Flecken entstehen, die sich auf Grund der Kapillarwirkung schnell auszubreiten vermögen. Die Folge ist eine Verringerung der Transparenz der Platte, die unter Umständen dazu führen kann, daß die Platte ausgetauscht werden muß. Der vorgenannte Nachteil kann sich aber auch dann auswirken, wenn die Platten zwar in Innenräumen eingebaut werden sollen, in denen sie an sich keinem Feuchtigkeitseinfluß ausgesetzt sind, aber bei der vorherigen Lagerung oder bei Transport feuchter Witterung ausgesetzt werden.

Die nach dem erfindungsgemäßen Verfahren hergestellte Hohlkammer-Profilplatte ist demgegenüber gegen Feuchtigkeitseinflüsse vollständig unempfindlich und somit in ihrer Transparenz von hoher Beständigkeit. Denn als Kernmaterial wird eine witterungsunempfindliche Kunststoff-Hohlkammer-Profilplatte verwendet.

Zur Herstellung einer lichtdurchlässigen Hohlkammer-Profilplatte mit strukturierter Oberfläche wird in Anwendung des erfindungsgemäßen Verfahrens entweder auf die eine Fläche oder auf beide Außenflächen einer extrudierten, transparenten Hohlkammer-Profilplatte aus thermoplastischem Werkstoff, insbesondere aus PVC oder einem Methacrylat, eine Deckschicht aus lichtstabilisiertem, kalthärtendem, transparentem Polyesterharz oder Acrylharz aufgebracht, wobei das Material flüssig zugeführt und eine entsprechend

0008677

strukturierte Formunterlage verwendet wird. Hierbei erzielt man einen guten Verbund zum Methacrylat bzw. dem PVC der Hohlkammer-Profilplatte. Als besonders geeignet für die Deckschicht hat sich ein Polyesterharz auf Orthophtalsäurebasis herausgestellt. Das Ergebnis des erfindungsgemäßen Verfahrens ist eine lichtstreuende Platte guter Transparenz und außerordentlich hoher Festigkeit. Dabei kann man entsprechend den jeweiligen Erfordernissen entweder beide Seiten strukturiert ausgestalten oder nur eine der Flächen strukturiert ausbilden. Die so hergestellte Platte ist, auch wenn sie durch Trennschnitte in einzeln Platten bestimmter Abmessungen aufgeteilt wird, gegen Witterungs insbesondere auch Feuchtigkeitseinflüsse unempfindlich und behäl daher ihre Eigenschaften über einen langen Zeitraum bei.

Zur Erhöhung der Festigkeit, insbesondere der Bruchfestigkeit gegen Schlagbeanspruchung, kann beim Auftragen der Deckschicht eine Glasfasermatte oder ein aus Glasfaser gebildetes Gewebe eingelegt werden. Eine damit ausgestattete Profilplatte eignet sich bevorzugt auch für Haustüren, wodurch die Einbruchsicherheit verbessert wird, sowie für Lichtwände, die gewissen Stoßbeanspruchungen ausgesetzt sind, wie etwa bei Sporthallen, Schwimmhallen u. dgl. Weiterhin bietet das erfindungsgemäße Verfahren die Möglichkeit, auf einfache Weise eine farbige Profilplatte mit strukturierter Oberfläche herzustellen, indem auf eine an sich farblos-transparente, extrudierte Hohlkammer-Profilplatte eine Deckschicht aus entsprechend eingefärbtem Polyesterharz oder Acrylharz in der oben beschriebenen Weise aufgetragen wird.

Patentansprüche

1. Verfahren zur Herstellung einer lichtdurchlässigen Kunstharz-Hohlkammer-Profilplatte mit strukturierter, lichtstreuender Oberfläche, dadurch gekennzeichnet, daß auf die Außenfläche(n) einer aus thermoplastischem Werkstoff, insbesondere aus Polyvenylchlorid oder auf Methacrylatbasis hergestellten, extrudierten transparenten Hohlkammer-Profilplatte zur Bildung der strukturierten Oberfläche eine Deckschicht aus flüssig zugeführtem, lichtstabilisiertem, kalthärtendem transparentem Polyesterharz oder Acrylharz unter Verwendung einer strukturierten Formunterlage aufgebracht wird.

2. Verfahren nach Anspruch 1, dadurch gekennzeichnet, daß in die Deckschicht bei flüssigem Polyesterharz bzw. Acrylharz eine Glasfaserschicht eingelagert wird.

3. Verfahren nach den Ansprüchen 1 und 2, dadurch gekennzeichnet, daß zwischen der Profilplatten-Außenfläche und der Formunterlage eine Glasfasermatte oder -gewebe eingelegt wird.

4. Verfahren nach den Ansprüchen 1 bis 3, dadurch gekennzeichnet, daß eingefärbtes Polyesterharz oder Acrylharz verwendet wird.

| Kategorie | **EINSCHLÄGIGE DOKUMENTE** Kennzeichnung des Dokuments mit Angabe, soweit erforderlich, der maßgeblichen Teile | betrifft Anspruch |
|---|---|---|
| | DE - A1 - 2 509 181 (W. BRÜGMANN & SOHN) | 1,4 |
| | * Seite 2, Zeile 1 bis Seite 3, Zeile 12* | |
| | — | |
| | DE - A - 1 779 024 (INSTITUT FÜR LEICHT- BAU) | 1,2 |
| | * Ansprüche 1, 2, 4; Seite 2, Zeile 31 bis Seite 4, Zeile 15 * | |
| | — | |
| A | DE - A - 2 230 901 (ASAHI KASEI KOGYO K.K.) | |
| | * ganzes Dokument * | |
| | — | |
| D | DE - C3 - 2 511 895 (H. KLINGEL et al.) | |
| | — | |
| D | DE - C - 1 646 226 (S.R. BARNETTE) | |
| | ---- | |

**KLASSIFIKATION DER ANMELDUNG (Int.Cl.3)**

B 29 D   9/10

**RECHERCHIERTE SACHGEBIETE (Int. Cl.3)**

B 29 C   23/00
B 29 C   27/14
B 29 D   9/00
B 32 B   3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

X   Der vorliegende Recherchenbericht wurde für alle Patentansprüche erstellt.

| Recherchenort | Abschlußdatum der Recherche | Prüfer |
|---|---|---|
| Berlin | 28-11-1979 | BRUCK |

EPA form 1503.1   06.78